# EUROPEAN PATENT APPLICATION

(11) **EP 3 708 831 A1**
(43) Date of publication of application: **16.09.2020**
(21) Application number: 19162173.9
(22) Date of filing: 12.03.2019
(51) Int. Cl.: F03D 80/70

(54) **DEVICE FOR LIFTING A WIND TURBINE SHAFT AND A METHOD FOR LIFTING THE WIND TURBINE SHAFT**

(71) Applicant: Siemens Gamesa Renewable Energy A/S, 7330 Brande (DK)
(72) Inventor: Bak, Frank, 8210 Aarhus V (DK); Brandt, Lars Jeff, 6920 Videbæk (DK); Lemma, Edom, 7100 Jerlev, Vejle (DK)
(74) Representative: Aspacher, Karl-Georg

(57) **Abstract**

The invention is directed to a device for lifting a wind turbine shaft (140) and a method for lifting the wind turbine shaft (140). The wind turbine shaft lifting device (200) comprises at least one hydraulic jack (201) connectable to a stationary part of a wind turbine fluid film bearing arrangement (160). The at least one hydraulic jack (201) is designed to vertically lift at least a part of a wind turbine shaft (140) inside the wind turbine fluid film bearing arrangement (160) .

## Description

### FIELD OF THE INVENTION

The invention relates to a wind turbine shaft lifting device, a device comprising at least one hydraulic jack designed to vertically lift at least a part of the wind turbine shaft inside a wind turbine fluid film bearing arrangement. The invention further relates to a method for lifting a wind turbine shaft using a wind turbine shaft lifting device.

### BACKGROUND OF THE INVENTION

A wind turbine generally comprises a tower supporting a nacelle, an electrical generator and a wind turbine rotor. The wind turbine rotor may comprise one or more wind turbine blades, rotatable around a longitudinal axis, coupled to a rotatable hub. In one embodiment, the electrical generator may be coupled to the wind turbine rotor via a gearbox. In another embodiment, the electrical generator may be directly coupled to the wind turbine rotor without the use of a gearbox. The electrical generator may be mechanically coupled to the wind turbine rotor via a wind turbine shaft.

The wind turbine rotor drives the electrical generator via the wind turbine shaft and the wind turbine shaft needs to be able to securely transfer mechanical energy from the wind turbine rotor to the electrical generator. The wind turbine shaft is supported by a wind turbine bearing arrangement. The wind turbine bearing arrangement provides a connection between rotating and stationary parts and carries the weight of the rotating parts.

The wind turbine bearing arrangement may be a fluid film bearing arrangement, therefore such an arrangement will also be referred to as "wind turbine fluid film bearing arrangement" in the following. In a wind turbine fluid film bearing arrangement, a thin film of fluid between a bearing pad and the supported rotating component allows the rotating component to slide easily, in a rotating manner, over the bearing pad. In an embodiment the rotating component may be the wind turbine shaft. Multiple bearing pads may be arranged in at least one row of bearing pads, annularly around the wind turbine shaft.

Due to forces acting on the bearing pads they may become worn out and in need of replacement and/or repair. One way to replace and/or repair bearing pads may be by using a large crane capable of removing the wind turbine rotor and/or the electrical generator from the wind turbine. This method is unfavourable due to cost of using large cranes, especially if the wind turbine is an offshore wind turbine, requiring specialized vessels for performing service operations.

### SUMMARY OF THE INVENTION

The present invention seeks to mitigate these drawbacks.

This objective is achieved by the independent claims. The dependent claims describe advantageous developments and modifications of the invention.

In accordance with the invention there is provided a wind turbine shaft lifting device comprising at least one hydraulic jack connectable to a stationary part of a wind turbine fluid film bearing arrangement, the at least one hydraulic jack designed to vertically lift at least a part of a wind turbine shaft inside the wind turbine fluid film bearing arrangement.

Claimed device allows simple replacement and/or repair of the wind turbine bearings, particularly bearing components, for example bearing pads. Advantage that described device offers is that lifting of the wind turbine shaft can be performed without using a large crane. This is particularly beneficial if the wind turbine is an offshore wind turbine where a specialized jack-up vessel is needed to provide a large crane.

The term "wind turbine shaft" specifies a rotatable mechanical interface between a wind turbine rotor and an electrical generator. The wind turbine rotor may be comprised of at least one wind turbine blade and a rotatable hub. The wind turbine shaft transfers mechanical energy from the wind turbine rotor to the electrical generator. The wind turbine shaft may also be referred to as a main drive shaft.

The term "stationary part of a wind turbine fluid film bearing arrangement" may describe a non-rotatable housing of the wind turbine bearing arrangement. Apart from the non-rotatable housing, the wind turbine fluid film bearing arrangement may comprise at least one row of bearing pads, distributed annularly around the wind turbine shaft. The wind turbine fluid film bearing arrangement may comprise uneven distribution of the bearing pads, with lower half-circle of the row comprising more bearing pads than upper half-circle of the row. Bearing pads may be arranged symmetrically about a vertical axis defined by a vertical plane intersecting the axis of rotation of the wind turbine shaft.

According to a preferred embodiment, the at least one hydraulic jack of the wind turbine shaft lifting device may be connectable substantially adjacent to at least one row of bearing pads of the wind turbine fluid film bearing arrangement. When the at least one hydraulic jack of the wind turbine shaft lifting device is connected substantially adjacent to at least one row of bearing pads of the wind turbine fluid film bearing, i.e. in the immediate periphery of the row of bearing pads, activation of the wind turbine shaft lifting device results in lifting of the wind turbine shaft and allows reliable replacement and/or service of the one or more bearing component, for example bearing pads.

Furthermore, the at least one hydraulic jack may comprise a top surface, i.e. a surface that can be elevated to be in physical contact with the wind turbine shaft, designed to conform an outer surface of the wind turbine shaft. Commonly, the wind turbine shaft may be of substantially cylindrical form. When the wind turbine shaft lifting device is deactivated, the top surface of the at least one hydraulic jack is not in contact with the wind turbine shaft. When the wind turbine shaft lifting device is activated, the top surface of the at least one hydraulic jack may frictionally support the wind turbine shaft.

In an alternative embodiment, the wind turbine shaft lifting device may comprise at least one other hydraulic jack, and a balanced lift may be achieved when the at least one hydraulic jack is engaged with the outer surface of the wind turbine shaft in a substantially same manner as the at least one other hydraulic jack.

As an example, two hydraulic jacks may be connected substantially adjacent to at least one row of bearing pads of the wind turbine fluid film bearing arrangement and preferably, two hydraulic jacks may be connected symmetrically, as mirror images, with respect to an axis of rotation of the wind turbine shaft. If the hydraulic jacks are engaged to exert a same amount of lifting force on the wind turbine shaft, the hydraulic jacks achieve the balanced lift of the wind turbine shaft. The balanced lift of the wind turbine shaft may allow replacement and/or repair of the bearing pads in the lower half-circle in a row of bearing pads of the wind turbine fluid film bearing arrangement, located closest to the vertical axis defined by a vertical plane intersecting the axis of rotation of the wind turbine shaft.

At least one hydraulic jack may be oriented in a way such that, when engaged with the outer surface of the wind turbine shaft, the at least one hydraulic jack is configured to vertically lift at least a part of the wind turbine shaft inside the wind turbine fluid film bearing arrangement. It should be noted that the vertical lift that may be provided by the wind turbine shaft lifting device is a localized lift, provided substantially adjacent to at least one row of bearing pads of the wind turbine fluid film bearing arrangement, in a way that at least part of the wind turbine shaft, normally supported by the bearing pads, is no longer in contact with the bearing pads located substantially below the wind turbine shaft. It should be noted, in respect of the term "in contact", that the bearing pads of the wind turbine fluid film bearing arrangement, e.g. during operation of a wind turbine, may include a thin layer of lubrication preventing direct contact of the wind turbine shaft and the surface of the bearing pads.

In another embodiment, an unbalanced lift may be achieved when the at least one hydraulic jack is engaged with the outer surface of the wind turbine shaft in a substantially different manner than the at least one other hydraulic jack. If the hydraulic jacks are engaged to exert different amount of lifting force on the wind turbine shaft, the hydraulic jacks may achieve the unbalanced lift of the wind turbine shaft. The unbalanced lift of the wind turbine shaft may allow replacement and/or repair of the bearing pads in the lower half-circle in the row of bearing pads of the wind turbine fluid film bearing arrangement that were not accessible in case of performing the balanced lift.

According to an embodiment, the wind turbine shaft lifting device may comprise a controller interface configured for connecting a controller, particularly the controller being configured for sending a command for activating the wind turbine shaft lifting device and engaging at least one hydraulic jack.

Furthermore, the controller may be configured for sending a command for engaging at least one hydraulic jack in order to provide balanced and/or unbalanced lift.

The invention is further directed to a method for lifting a wind turbine shaft, for which the previously explained device is disclosed. The method comprises:
- connecting the at least one hydraulic jack to the stationary part of the wind turbine fluid film bearing arrangement, and
- vertically lifting at least, a part of the wind turbine shaft inside the wind turbine fluid film bearing arrangement by engaging the at least one hydraulic jack with the wind turbine shaft.

In a preferred embodiment, the step of connecting at least one hydraulic jack to the stationary part of the wind turbine fluid film bearing arrangement may be performed by positioning the hydraulic jack substantially adjacent to the at least one row of bearing pads of the wind turbine fluid film bearing arrangement.

Furthermore, the method according to the invention may further comprise:
- replacing and/or repairing at least one bearing pad of the wind turbine fluid film bearing arrangement.

According to an embodiment, the step of vertically lifting at least the part of the wind turbine shaft inside the wind turbine fluid film bearing arrangement may be performed by a balanced lift such that the at least one hydraulic jack is engaged in a substantially same manner as the at least one other hydraulic jack.

Alternatively, the step of vertically lifting at least the part of the wind turbine shaft inside the wind turbine fluid film bearing arrangement may be performed by an unbalanced lift such that the at least one hydraulic jack is engaged in a substantially different manner than the at least one other hydraulic jack.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless otherwise noted, in addition to any combination of features belonging to one type of subject matter also any combination between features relating to different subject matters, in particular between features of the apparatus type claims and features of the method type claims is considered as to be disclosed with this application.

The aspects defined above and further aspects of the present invention are apparent from the examples of embodiment to be described hereinafter and are explained with reference to the examples of embodiment.

### BRIEF DESCRIPTION OF THE DRAWINGS

Embodiments of the invention will now be described, by way of example only, with reference to the accompanying drawings, of which:
- FIG. 1:: shows schematically a wind turbine with a wind turbine bearing arrangement supporting a wind turbine shaft;
- FIG. 2:: shows a view of a wind turbine shaft and a housing of a wind turbine fluid film bearing arrangement;
- FIG. 3:: shows a row of circularly distributed bearing pads of a wind turbine fluid film bearing arrangement and a bearing pad;
- FIG. 4:: shows a wind turbine shaft lifting device inside a wind turbine fluid film bearing arrangement supporting a wind turbine shaft;
- FIG. 5:: shows a wind turbine shaft lifting device supporting a wind turbine shaft and bearing pads of a wind turbine fluid film bearing arrangement;
- FIG. 6:: shows an elevated wind turbine shaft, in particular a balanced lift of a wind turbine shaft;
- FIG. 7:: shows steps in a method for lifting a wind turbine shaft with a wind turbine shaft lifting device;

The illustration in the drawing is schematical. It is noted that for similar or identical elements in different figures, the same reference signs will be used.

### DETAILED DESCRIPTION OF THE INVENTION

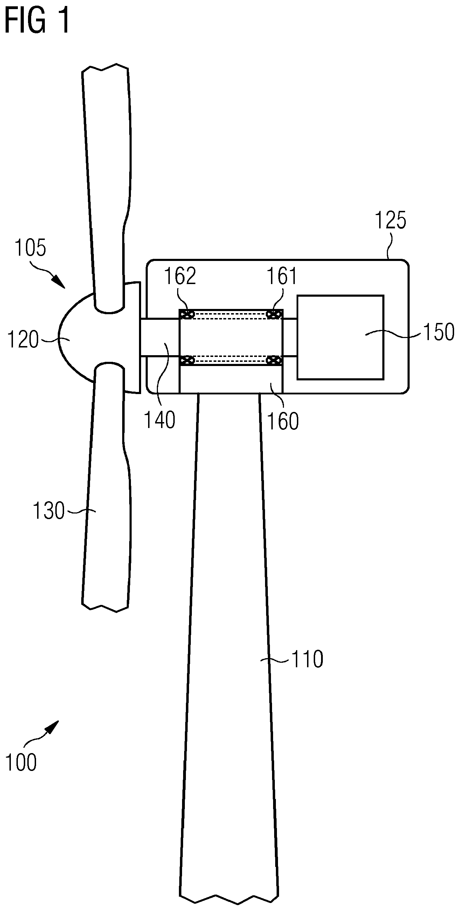

Referring now to figure 1, a wind turbine 100 with a wind turbine bearing arrangement 160 is illustrated.
A wind turbine 100 generally comprises a tower 110 supporting a nacelle 125, an electrical generator 150 and a wind turbine rotor 105. The wind turbine rotor 105 may comprise a blade 130, preferably three blades, rotatable around its longitudinal axis, coupled to a rotatable hub 120.

The electrical generator 150 may be located in the nacelle 125 and coupled to the wind turbine rotor 105 via a wind turbine shaft 140. Additionally, a gearbox (not shown in figure) may be used to couple the wind turbine rotor 105 to the electrical generator 150.

Alternatively, the electrical generator 150 may be located outside of the nacelle 125 and/or directly coupled to the wind turbine rotor 105 without the use of a gearbox. In the depicted figure 1 the wind turbine rotor 105 is directly coupled to the generator, and the generator is arranged inside the nacelle. The electrical generator 150 may be mechanically coupled to the wind turbine rotor 105 via the wind turbine shaft 140.

The wind turbine shaft 140 transfers mechanical energy from the wind turbine rotor 105 to the rotational part of the electrical generator 150. The electrical generator 150 further transforms provided mechanical energy into electrical energy that can be injected into electrical networks.

The wind turbine shaft 140 may be supported by the wind turbine bearing arrangement, also referred to as main bearing. The wind turbine bearing arrangement may be a wind turbine fluid film bearing arrangement 160. The wind turbine fluid film bearing arrangement 160 is different than other bearing types such as a roller bearing, or a ball bearing.

Figure 1 shows the wind turbine fluid film bearing arrangement 160 with two bearings supporting the wind turbine shaft 140: a down-wind bearing 161 and an up-wind bearing 162. The down-wind bearing 161 is positioned in the wind turbine fluid film bearing arrangement 160 further away from the up-wind bearing 162 with respect to wind turbine rotor 105.

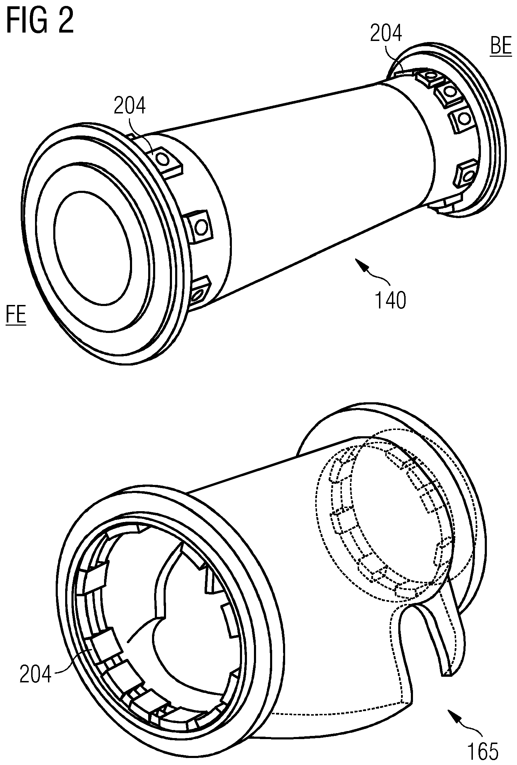

Figure 2 shows the wind turbine shaft 140 and the wind turbine fluid film bearing housing 165.

The wind turbine shaft 140 is shown in the upper figure of figure 2, with one row of bearing pads 204 arranged circularly around the front end FE of the wind turbine shaft 140 and one row of bearing pads 204 arranged around the back end BE of the wind turbine shaft 140. The bearing pads are shown in a location in which they are held by the wind turbine fluid film bearing housing 165.

The wind turbine fluid film bearing housing 165 is shown in the bottom of figure 2, indicating the annular spaces, or races, at both ends, in which at least one row of bearing pads 204 may be arranged. The wind turbine fluid film bearing housing 165 is shaped to partially enclose the wind turbine shaft 140.

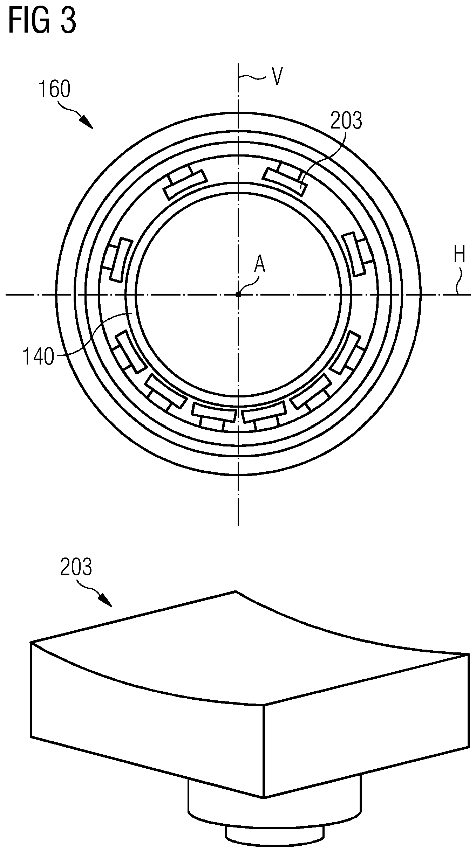

In the top figure of figure 3 a cross-sectional view of the wind turbine fluid film bearing arrangement 160 is shown, with a row of bearing pads 204 distributed circularly around an axis of rotation A of the wind turbine shaft 140. Figure 3 shows in the bottom figure a bearing pad 203 of the wind turbine fluid film bearing arrangement 160.

The wind turbine fluid film bearing arrangement 160 is typically comprised of multiple bearing pads 203 distributed circumferentially around the wind turbine shaft 140 and forming at least one row of bearing pads 204. As can be seen from the top figure of figure 3, distribution of the bearing pads 203 may be uneven, with more bearing pads 203 located in the bottom half-circle in the row of bearing pads 204 compared to upper half-circle in the row of bearing pads 204. Upper half-circle and lower half-circle are separated by a horizontal line H. For achieving optimal load distribution, the bearing pads 203 may be distributed symmetrically with respect to a vertical line V. Horizontal line H and vertical line V are intersecting in a point lying on the axis of rotation A of the wind turbine shaft 140.

In the bottom of figure 3 the bearing pad 203 is shown. A surface of the bearing pad 203 may be lightly rounded to match the outer surface of the rotating component, for example the wind turbine shaft 140. In a bearing such as a fluid film bearing, a thin film of fluid between a bearing pad 203 and a supported component is created, thereby avoiding direct contact of the two surfaces and allowing for smooth rotation of the supported component, for example the wind turbine shaft 140.

During the operational lifetime, the one or more bearing pads 203, shown in above figures may require replacement and/or repair due to wear-and-tear or inflicted damages. Known to a skilled person, one way to replace and/or repair bearing pads 203 may be by using a large crane capable of removing the wind turbine rotor 105 and/or the electrical generator 150 from the wind turbine 100. This method is unfavourable due to cost of using large cranes, especially if the wind turbine 100 is an offshore wind turbine, requiring specialized vessels for performing service operations.

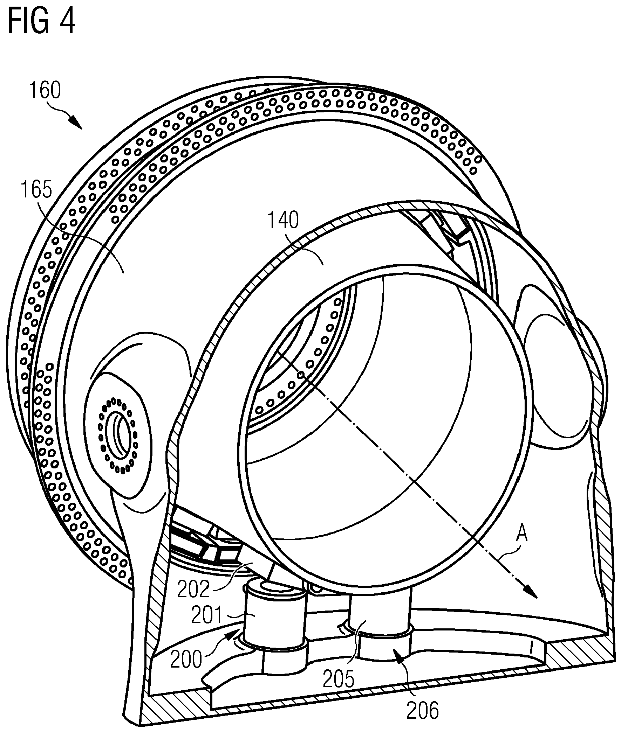

A more efficient solution may be explained along the following figures. A wind turbine shaft lifting device 200 according to a preferred embodiment of the invention is shown in figure 4. Figure 4 illustrates the wind turbine bearing arrangement 160 to which a wind turbine shaft lifting device 200 may be connected. Wind turbine shaft 140 may be enclosed by a wind turbine fluid film bearing housing 165 and may be supported by at least one row of bearing pads 204 of the wind turbine fluid film bearing arrangement 160. The wind turbine shaft 140 is rotatable around its longitudinal axis A, inside the wind turbine bearing housing 165.

The wind turbine fluid film bearing housing 165 may comprise a structurally reinforced section 206 suitable for connecting the wind turbine shaft lifting device 200. The structurally reinforced section 206 may be, but not limited to, a steel-reinforced section. Structural reinforcement of the wind turbine bearing housing 165 may be needed to withstand the loads when performing the lifting of the wind turbine shaft 140.

Adjacent to the at least one row of bearing pads (204 as illustrated in previous figures), the wind turbine shaft lifting device 200 may be connected to the structurally reinforced section 206 of the wind turbine bearing housing 165. In that way, activation of the wind turbine shaft lifting device 200, i.e. triggering of an elevation of pistons of a hydraulic jack, allows lifting the wind turbine shaft 140 and access to one or more bearing component, for example the bearing pad 203. The wind turbine shaft lifting device 200 may comprise at least one hydraulic jack 201 which comprises a top surface 202 designed to conform an outer surface of the wind turbine shaft 140. In figure 4, the wind turbine shaft lifting device 200 is illustrated having two hydraulic jacks 201, 205.

Two hydraulic jacks 201, 205, may be connected substantially adjacent to at least one row of bearing pads 204 of the wind turbine fluid film bearing arrangement 160 and preferably, two hydraulic jacks 201, 205 may be connected symmetrically, as mirror images, with respect to a vertical plane which is defined by the axis of rotation A of the wind turbine shaft 140 and a vector with vertical orientation.

The wind turbine shaft lifting device 200 may be used to vertically lift, or elevate at least part of the wind turbine shaft 140 inside the wind turbine fluid film bearing housing 165. When the wind turbine shaft lifting device 200 is activated, the top surface 202 of at least one hydraulic jack 201 may be engaged with the surface of the wind turbine shaft 140.

Vertically lifting at least part of the wind turbine shaft 140 inside the wind turbine fluid film bearing housing 165 is advantageous due to the possibility of exchange and/or repair of at least one component of the wind turbine fluid film bearing arrangement 160, for example the bearing pad 203, without dismantling the whole top section of the wind turbine 100. It should be noted that the vertical lift that may be provided by the wind turbine shaft lifting device 200 is a localized lift, provided substantially adjacent to at least one row of bearing pads 204 of the wind turbine fluid film bearing arrangement 160, in a way that at least part of the wind turbine shaft 140, normally supported by the bearing pads 203, is no longer in contact with the bearing pads 203 located substantially below the wind turbine shaft 140.

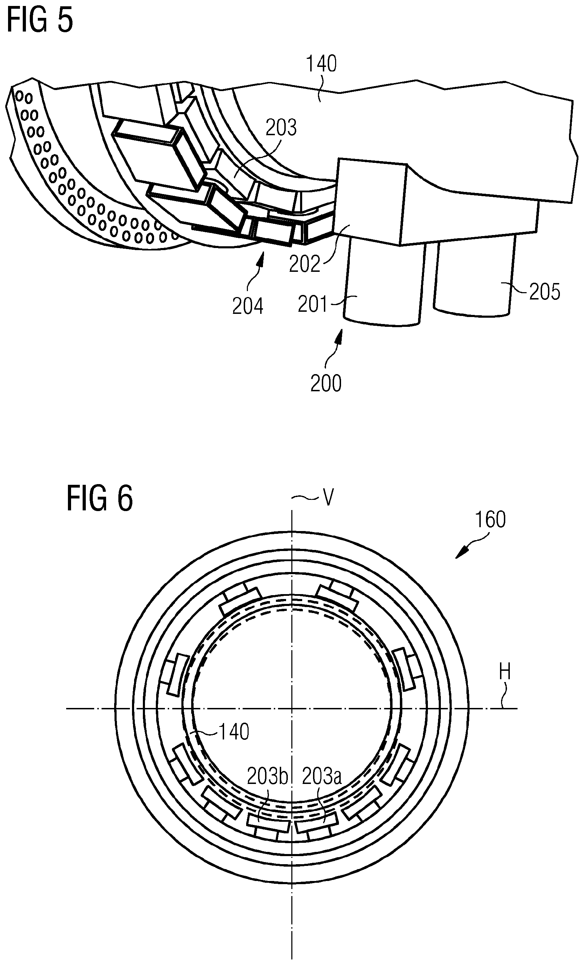

Figure 5 illustrates the wind turbine shaft lifting device 200, with the top surface of the hydraulic jack 202 engaged with the surface of the wind turbine shaft 140. Wind turbine shaft lifting device 200, as shown in figure 5, may comprise two hydraulic jacks 201, 205 and may be mounted adjacent to the at least one row of bearing pads 204.

During operation of the wind turbine 100, as shown in figure 1, forces are acting on the wind turbine fluid film bearing arrangement 160. One or more bearing components, for example bearing pads 203, may become worn out and in need of maintenance and/or replacement. As known to a skilled person, one way to replace and/or repair bearing components may be by using a large crane capable of removing the wind turbine rotor 105 and/or the electrical generator 150 from the wind turbine 100. This method is unfavourable due to cost of using large cranes, especially if the wind turbine 100 is an offshore wind turbine, requiring specialized vessels for performing service operations.

As shown in figure 5, the wind turbine shaft lifting device 200 may comprise two hydraulic jacks 201, 205, and a balanced lift may be achieved when one hydraulic jack 201 is engaged with the outer surface of the wind turbine shaft 140 in a substantially same manner as the at least one other hydraulic jack 205. If the hydraulic jacks 201, 205 are engaged to exert a same amount of lifting force on the wind turbine shaft 140, the hydraulic jacks 201, 205 achieve the balanced lift of the wind turbine shaft 140.

The balanced lift of the wind turbine shaft 140 is illustrated in figure 6. Cross-section of the wind turbine shaft 140, is illustrated with a dashed line, forming two concentric circles. Cross-section of the wind turbine shaft 140, after performing the balanced lift of the wind turbine shaft 140 is illustrated with solid lines. The balanced lift of the wind turbine shaft 140 may allow replacement and/or repair of a bearing pads 203a and/or 203b, located below the wind turbine shaft 140, while the wind turbine shaft 140 is in a lifted position. The bearing pad 203a is located closest to the vertical axis V defined by a vertical plane intersecting the axis of rotation of the wind turbine shaft 140.

In another embodiment, referring to figure 5, an unbalanced lift may be achieved when the at least one hydraulic jack 201 is engaged with the outer surface of the wind turbine shaft 140 in a substantially different manner than the at least one other hydraulic jack 205. If the hydraulic jacks 201, 205 are engaged to exert different amount of lifting force on the wind turbine shaft 140, the hydraulic jacks 201, 205 may achieve the unbalanced lift of the wind turbine shaft 140. The unbalanced lift of the wind turbine shaft 140 may allow replacement and/or repair of the bearing pads 203, located below the wind turbine shaft 140, that were not accessible in case of the balanced lift.

The activation of the wind turbine shaft lifting device 200 for lifting the wind turbine shaft 140 may be achieved through a dedicated controller being configured for sending a command for engaging at least one hydraulic jack 201. The wind turbine shaft lifting device 200 may comprise an interface configured for connecting the said controller. The controller may be configured for sending a command for engaging at least one hydraulic jack 201 in order to provide balanced and/or unbalanced lift of the wind turbine shaft 140. Such a controller may be a part of an overall control system or may be a separate component. The hydraulic jacks 201, 205 are actuators triggered by the controller. Optionally sensors, e.g. pressure sensors, may be provided, which will be read by the controller to monitor the effect of the movement of the hydraulic jack.

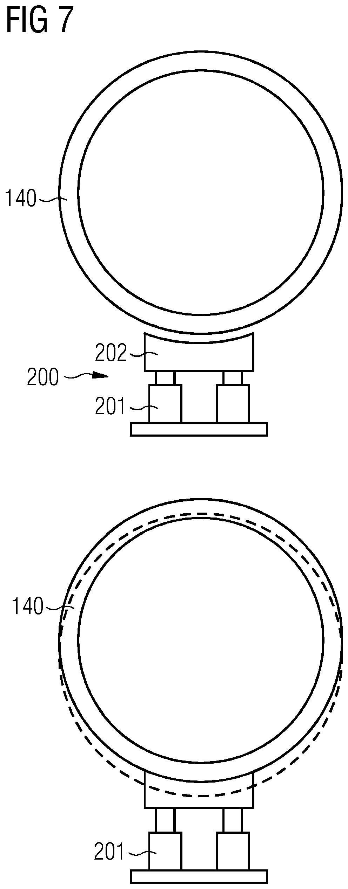

Figure 7 illustrates the steps in a method for lifting a wind turbine shaft 140. Upper figure of figure 7 illustrates a state where the at least one hydraulic jack of the wind turbine shaft lifting device 200 is connected to a wind turbine fluid film bearing arrangement 160 (not shown). It is visible that at least one hydraulic jack of the wind turbine shaft lifting device 200 is not elevated, and the top surface of the hydraulic jack 202 is not in contact with the wind turbine shaft 140. Bottom figure of figure 7 illustrates a state where the wind turbine shaft 140 is lifted inside the wind turbine fluid film bearing arrangement 160 (not shown) by engaging the at least one hydraulic jack 201 with the wind turbine shaft 140. Dashed line represents the initial position of the wind turbine shaft 140, while the solid line depicts the wind turbine shaft 140 in an elevated state, wind turbine shaft 140 is pushed upwards.

## Claims

1. Wind turbine shaft lifting device (200) comprising:
at least one hydraulic jack (201) connectable to a stationary part of a wind turbine fluid film bearing arrangement (160), the at least one hydraulic jack (201) designed to vertically lift at least a part of a wind turbine shaft (140) inside the wind turbine fluid film bearing arrangement (160).

2. Wind turbine shaft lifting device (200) according to claim 1, **characterised in that** the at least one hydraulic jack (201) is connectable substantially adjacent to at least one row of bearing pads (204) of the wind turbine fluid film bearing arrangement (160).

3. Wind turbine shaft lifting device (200) according to any of the preceding claims, **characterised in that** the at least one hydraulic jack (201) comprises a top surface (202) designed to conform an outer surface of the wind turbine shaft (140).

4. Wind turbine shaft lifting device (200) according to any of the preceding claims, **characterised in that** the wind turbine shaft lifting device (200) comprises at least one other hydraulic jack (205), and wherein a balanced lift is achieved when the at least one hydraulic jack (201) is engaged with the outer surface of the wind turbine shaft (140) in a substantially same manner as the at least one other hydraulic jack (205).

5. Wind turbine shaft lifting device (200) according claim 4, **characterised in that** the at least one hydraulic jack (201) is oriented in a way such that, when engaged with the outer surface of the wind turbine shaft (140), the at least one hydraulic jack (201) is configured to vertically lift at least a part of the wind turbine shaft (140) inside the wind turbine fluid film bearing arrangement (160) .

6. The wind turbine shaft lifting device (200) according to any of the preceding claims, **characterised in that** the wind turbine shaft lifting device (200) comprises at least one other hydraulic jack (205), and wherein an unbalanced lift is achieved when the at least one hydraulic jack (201) is engaged with the outer surface of the wind turbine shaft (140) in a substantially different manner than the at least one other hydraulic jack (205).

7. Wind turbine shaft lifting device (200) according to any preceding claims, comprising a controller interface configured for connecting a controller, particularly the controller being configured for sending a command for engaging at least one hydraulic jack (201).

8. Wind turbine shaft lifting device (200) according to any preceding claims, **characterised in that** the controller is configured for sending a command for engaging at least one hydraulic jack (201) in order to provide balanced and/or unbalanced lift.

9. Method for lifting a wind turbine shaft (140), wherein the method comprises:
- connecting at least one hydraulic jack (201) to a stationary part of a wind turbine fluid film bearing arrangement (160), and
- vertically lifting at least, a part of the wind turbine shaft (140) inside the wind turbine fluid film bearing arrangement (160) by engaging the at least one hydraulic jack (201) with the wind turbine shaft (140) .

10. Method according to claim 9, wherein the step of connecting at least one hydraulic jack (201) to the stationary part of the wind turbine fluid film bearing arrangement (160) is performed by positioning the hydraulic jack (201) substantially adjacent to at least one row of bearing pads (204) of the wind turbine fluid film bearing arrangement (160).

11. Method according to claim 9, wherein the method further comprises:
- exchanging and/or repairing at least one bearing pad (203) of the wind turbine fluid film bearing arrangement (160) .

12. Method according to claim 9, wherein the step of vertically lifting at least the part of the wind turbine shaft (140) inside the wind turbine fluid film bearing arrangement (160) is performed by a balanced lift such that the at least one hydraulic jack (201) is engaged in a substantially same manner as the at least one other hydraulic jack (205).

13. Method according to claim 9, wherein the step of vertically lifting at least the part of the wind turbine shaft (140) inside the wind turbine fluid film bearing arrangement (160) is performed by an unbalanced lift such that the at least one hydraulic jack (201) is engaged in a substantially different manner than the at least one other hydraulic jack (205).
